# EUROPEAN PATENT APPLICATION

(11) **EP 1 684 234 A1**
(43) Date of publication of application: **26.07.2006**
(21) Application number: 05075138.7
(22) Date of filing: 20.01.2005
(51) Int. Cl.: G06T 11/20, G06T 1/00, G06T 1/60

(54) **Graphics rendering system and method**

(71) Applicant: Culture.com Technology (Macau) Ltd, Macau (CN)
(72) Inventor: Hu, Tian-Bao, C.C., 6 & (I-L), Macau (CN)
(74) Representative: Rees, Alexander Ellison

(57) **Abstract**

A graphics rendering system and a graphics rendering method are applied in an environment for graph production and image processing. After a graph code is entered into the graphics rendering system, it is analyzed by a graph code processing module in the graphics rendering system to find one or more records of data corresponding to the graph code and transfer the one or more records of data to an image producing module, wherein the data are in the command form and required for outputting complete graphs/images. The image producing module includes an image producing program for interpreting and executing the commands. The image producing program decodes composition, structure and ratio of graphs/images from the graph code and produces the required graphs/images according to graph/image producing parameters obtained from information provided by the data corresponding to the graph code, without having to use lookup table mapping in the prior art.

## Description

### FIELD OF THE INVENTION

The present invention relates to graphics rendering systems and methods, and more particularly, to a system and a method for producing graphics in a display unit of an electronic device.

### BACKGROUND OF THE INVENTION

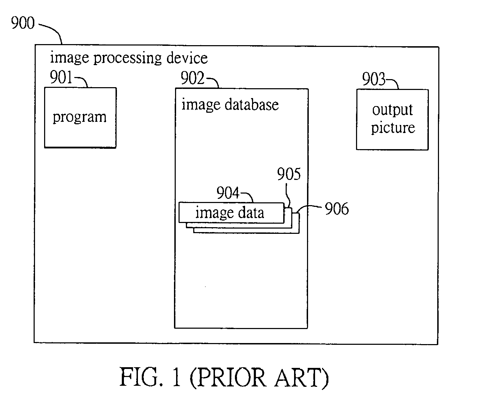

In a conventional process of image production for a picture, as shown in FIG. 1, an image processing device 900 executes a program 901 to read graph/image data from an image database 902 to produce an image of an output picture 903, wherein the program 901 utilizes lookup table mapping to read the image data 904, 905, 906 pre-stored in the image database 902 to display the image on the output picture 903. During the image producing process, it is necessary to store all the image data 904, 905, 906 in the image database 902 and store graph/image data for each picture or all graph/image object data of a picture in the image database 902 in advance so as to allow the program 901 to find the required image data 904, 905, 906 when executing the program 901.

The current conventional technology of image production utilizes lookup table mapping and is necessary to in advance store each record of required graph/image data and store graph/image data for each picture or all graph/image object data of a picture in the image database prior to performing image production and picture construction. Such graphics rendering method requires a huge data storage space. Moreover, for similar image objects, there exist a lot of repetitive image data and parameters in the corresponding image files. This results in a large waste of image storage space and thereby affects the image production rate due to the time required to read the data.

In the case of displaying two pictures successively, after the first picture is displayed and if the second picture is made by simply adding a few image objects to the first picture without changing the background image of these two pictures, the conventional technology cannot change only those added image objects to turn the first picture into the second picture. In other words, although the second picture merely differs from the first picture in the added image objects but has the same background image and color as the first picture, instead of partially altering the first picture, the conventional technology would necessarily replace the whole picture to display the second picture. Particularly, all the image objects constituting the second picture need to be read and displayed as a whole to form the second picture. Such method for displaying successive pictures causes a lot of repetitive image data and parameters stored in the image files, and thus wastes a large image storage space and affects the speed of producing successive pictures.

Besides, by the conventional graphics rendering technology, it is necessary to in advance store each record of required graph/image data and store graph/image data for each picture or all graph/image object data of a picture in the image database, such that the required information can be found in the image database when executing the program.

Therefore, the problem to be solved here is to provide a graphics rendering system and method, which can reduce usage of an image storage space without affecting the image production rate.

### SUMMARY OF THE INVENTION

In light of the above drawbacks in the prior art, a primary objective of the present invention is to provide a graphics rendering system and method, applied in an environment for graph production and image processing, whereby when a graph code is inputted to the graphics rendering system, the composition, structure and ratio of graphs/images can be decoded from the graph code by the graphics rendering system according to graph/image producing parameters provided by data corresponding to the graph code so as to produce and obtain the required graphs/images in accordance with the graph/image producing parameters.

Another objective of the present invention is to provide a graphics rendering system and method, applied in an environment for graph production and image processing, without having to utilize lookup table mapping, obtain graphs/images from an image database, constitute graphs/images from the image database in an automated or manual manner, or in advance store each record of required graphlimage data, graph/image data for each picture or all graph/image object data of a picture in the image database.

Still another objective of the present invention is to provide a graphics rendering system and method, applied in an environment for graph production and image processing, wherein a graph code is analyzed by a graph code processing module of the graphics rendering system to obtain one or more records of data corresponding to the graph code and transfer the one or more records of data to an image producing module; after the image producing module obtains the data, all the obtained data are in the command form and required for outputting complete graphs/images.

A further objective of the present invention is to provide a graphics rendering system and method, applied in an environment for graph production and image processing, wherein an image producing program in the image producing module is used to interpret and execute the foregoing commands, and the image producing program utilizes graph/image producing parameters obtained according to information provided by data corresponding to the graph code so as to decode the composition, structure and ratio of graphs/images from the graph code without requiring any lookup table and without each graph code being necessarily corresponding to one certain graph/image in the image database, such that the required graphs/images can be produced and obtained according to the graph/image producing parameters.

In accordance with the foregoing and other objectives, the present invention proposes a graphics rendering system and method, applied in an environment for graph production and image processing. When a graph code is inputted to the graphics rendering system, the graphics rendering system analyzes the graph code to find one or more records of data corresponding to the graph code, and decodes the composition, structure and ratio of graphs/images from the graph code according to graph/image producing parameters provided by data corresponding to the graph code. Thereby, the graphics rendering system produces and obtains the required graphs/images according to the graph/image producing parameters without having to utilize lookup table mapping to obtain graphs/images from an image database or without having to constitute the graphs/images from the image database in an automated or manual manner.

The graphics rendering system in the present invention includes a graph code processing module, a database, and an image producing module. During a process of image production, a graph code is entered into the graphics rendering system, the graph code processing module of the graphics rendering system analyzes the graph code to find one or more records of data corresponding to the graph code, and transfers the one or more records of data to the image producing module; after the image producing module obtains the data, all the obtained data are in the command form and required for outputting complete graphs/images. An image producing program in the image producing module is used to interpret and execute those commands. The image producing program utilizes graph/image producing parameters obtained according to information provided by data corresponding to the graph code so as to decode the composition, structure and ratio of graphs/images from the graph code without requiring any lookup table and without each graph code being necessarily corresponding to one certain graph/image in the image database, such that the required graphs/images can be produced and obtained by the image producing program according to the graph/image producing parameters.

### BRIEF DESCRIPTION OF THE DRAWINGS

The present invention can be more fully understood by reading the following detailed description of the preferred embodiments, with reference made to the accompanying drawings, wherein:
FIG. 1 (PRIOR ART) is a systemic block diagram showing basic architecture of a conventional image processing device;
FIG. 2 is a systemic block diagram showing architecture of a graphics rendering system according to the present invention;
FIG. 3(a) is a schematic diagram showing structure of a single-layer graph code;
FIG. 3(b) is a schematic diagram showing structure of a multi-layer graph code;
FIG. 4(a) is a schematic diagram showing configuration of a database in the graphics rendering system shown in FIG. 2 when utilizing an indexing technique;
FIG. 4(b) is a schematic diagram showing a graph code being divided to obtain a classification prefix and a classification suffix;
FIG. 4(c) is a schematic diagram showing configuration of the database in the graphics rendering system shown in FIG. 2 when not utilizing the indexing technique;
FIG. 5(a) is a schematic diagram showing a command structure of data;
FIG. 5(b) is a schematic diagram showing a combination condition of an application command and a graph code for a graph/image superimposing combination or other types of combinations of one or more pictures;
FIG. 6 is a flowchart showing a graphics rendering method in the use of the graphics rendering system shown in FIG. 2;
FIG. 7 is a flowchart showing a set of detailed procedures of a step for searching data in the graphics rendering method shown in FIG. 6;
FIG. 8 is a flowchart showing another set of detailed procedures of the step for searching data in the graphics rendering method shown in FIG. 6;
FIG. 9 is a flowchart showing detailed procedures of a step for executing a commands by an image producing program to produce graphs/images in the graphics rendering method shown in FIG. 6;
FIG. 10 is a flowchart showing procedures for producing graphs in a picture by the graphics rendering system and method according to a preferred embodiment of the present invention;
FIG. 11 is a schematic diagram showing configuration of a database in the graphics rendering system shown in FIG. 10 when utilizing the indexing technique;
FIG. 12 is a schematic diagram showing a picture obtained by the graphics rendering system shown in FIG. 10 after executing the graphics rendering method;
FIG. 13 is a flowchart showing procedures for producing graphs in a picture by the graphics rendering system and method according to another preferred embodiment of the present invention;
FIG. 14 is a schematic diagram showing a picture obtained by the graphics rendering system shown in FIG. 13 after executing the graphics rendering method;
FIG. 15 is a flowchart showing procedures for producing graphs in a picture by the graphics rendering system and method according to a further preferred embodiment of the present invention; and
FIG. 16 is a schematic diagram showing a picture obtained by the graphics rendering system shown in FIG. 15 after executing the graphics rendering method.

### DETAILED DESCRIPTION OF THE PREFERRED EMBODIMENTS

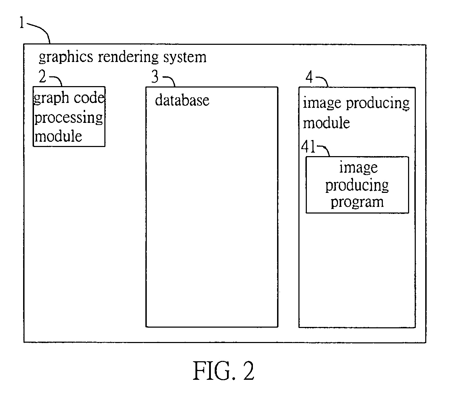

FIG. 2 is a systemic block diagram showing architecture of a graphics rendering system according to the present invention. As shown in FIG. 2, the graphics rendering system 1 in the present invention includes a graph code processing module 2, a database 3, and an image producing module 4, wherein the graphics rendering system 1 can be a hardware chip, or computer software stored in a memory device of a computer system.

When a graph code is entered into the graphics rendering system 1, the graph code processing module 2 in the graphics rendering system 1 analyzes the graph code according to information in the database 3 to find one or more records of data corresponding to the graph code, and transfers the one or more records of data to the image producing module 4; after the image producing module 4 obtains the data, all the obtained data are in the command form and required for outputting complete graphs/images. An image producing program 41 in the image producing module 4 is used to interpret and execute those commands. The image producing program 41 utilizes graph/image producing parameters obtained according to information provided by data corresponding to the graph code so as to decode the composition, structure and ratio of graphs/images from the graph code without requiring any lookup table and without each graph code being necessarily corresponding to one certain graph/image in an image database, such that the required graphs/images can be produced and obtained by the image producing program 41 according to the graph/image producing parameters.

The selection principle of graph codes depends on visual positions of graphs. In accordance with the order of from exterior to interior, from up to down and from left to right, graphs/images and the corresponding graph codes are subjected to setting and processing. A graph code can be set to comprise a number of n1 segments of codes if required. In this embodiment, n1 is for example, but not limited to, 2, for explaining a condition of graph code selection. In the case of a graph code comprising 2 segments, the graph code can be divided to obtain one segment as a prefix code and the other segment as a suffix code; that is, the graph code is composed of the prefix code and the suffix code. If the selected prefix and suffix codes are not further processed respectively, the graph code is considered having a structure of single-layer graph code comprising the prefix code and the suffix code. With respect to constitution of a graph/image, if the graph/image is composed of an exterior part and an interior part, the prefix code represents the exterior part and the suffix code represents the interior part; if the graph/image is constituted by a left part and a right part, the prefix code represents the left part and the suffix code represents the right part; if the graphlimage comprises an upper part and a lower part, the prefix code represents the upper part and the suffix code represents the lower part.

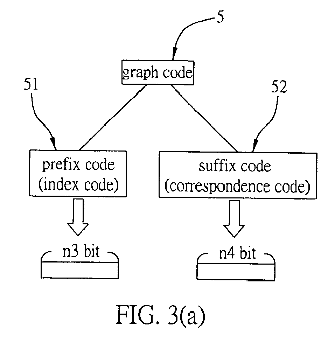

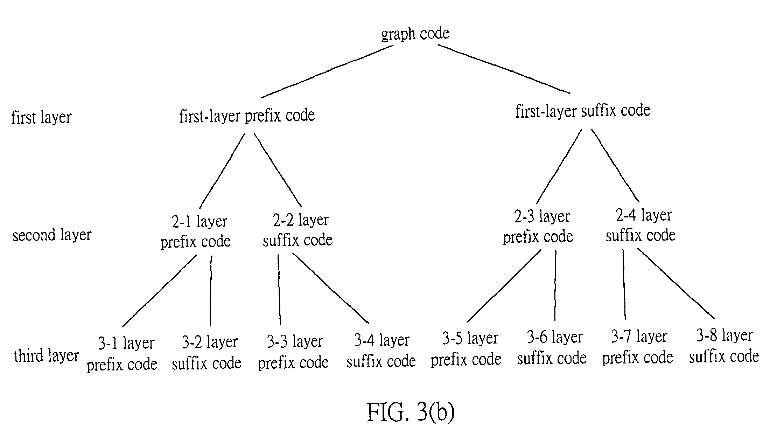

If the constitution of graph/image is complicated, the graph code representing the graph/image can be classified layer by layer according to the degree of complexity. In addition to the foregoing single-layer structure, the selected prefix and suffix codes can be further processed respectively depending on the complexity of graph/image. As shown in FIG. 3(a) showing a structure of single-layer graph code, if the selected prefix and suffix codes are not further processed respectively, the graph code 5 is considered having the structure of single-layer graph code comprising a prefix code 51 and a suffix code 52. No matter whether a graph code has a single-layer structure (as shown in FIG. 3(a)) or a multi-layer structure (as shown in FIG. 3(b)), the principle and method of code selection are the same and only differ in the number of layers.

As shown in FIG. 3(b), the graph code has a multi-layer structure. If constitution of a graph/image is complicated, the graph code representing the graph/image can be classified layer by layer according to the degree of complexity. Firstly, the graph code is divided into a first-layer prefix code and a first-layer suffix code. Then, the first-layer prefix code is further divided into a 2-1 layer prefix code and a 2-2 layer suffix code. Similarly, the first-layer suffix code is further divided into a 2-3 layer prefix code and a 2-4 layer suffix code. As for the third layer, the same principle can be applied to obtain a set of 3-1 layer prefix code and 3-2 layer suffix code, a set of 3-3 layer prefix code and 3-4 layer suffix code, a set of 3-5 layer prefix code and 3-6 layer suffix code, and a set of 3-7 layer prefix code and 3-8 layer suffix code. The operational principle and method for a graph code with three or more layers are similar to those applied to a graph code with a single layer, and thus are not to be further described herein.

When utilizing an indexing technique, a graph code can be set to comprise a number of n2 segments, wherein n2 is a natural number for example, but not limited to, 2, for explaining a condition of graph code selection. As shown in FIG. 3(a) with n2 = 2, in the case of the graph code 5 comprising 2 segments, the graph code 5 can be divided to obtain one segment as the prefix code 51 and the other segment as the suffix code 52. In the indexing technique, the prefix code 51 serves as an index code and the suffix code 52 serves as a correspondence code. The graph code 5 is composed of the prefix code 51 and the suffix code 52; in other words, the graph code 5 is composed of the index code 51 and the correspondence code 52. The selection principle for graph codes depends on visual positions of graphs in accordance with the order of from exterior to interior, from up to down and from left to right. In this embodiment, according to a requirement for classification and resolution of graph/image, the prefix code 51 can be set as n3 bits, for instance, n3 = 10, 15 or 20, that is, the prefix code 51 can be 10 bits, 15 bits or 20 bits; and the suffix code 52 can be set as n4 bits, for instance, n4 = 15, 20 or 25, that is, the suffix code 52 can be 15 bits, 20 bits or 25 bits. The prefix code 51 serving as an index code is used to establish an index table and thus an index address area file; and the suffix code 52 serves as a correspondence code. There are a number of c records of data in the address area, and each record of data is represented by a suffix code 52 having d bits, which can be combined as e characters, satisfying (e-1)<(d/8)<=(e). For example, when d = 15, e = 2 i.e. two characters. There would be c*e characters if there are c records of data in the address area. For the convenience of expansion, in this embodiment, only the correspondence code (suffix code 52) is stored for use as comparison reference for inputted graph codes. After finding data corresponding to the graph codes, there would be some information obtained referring to graph/image producing parameters. The graph/image producing parameters are in the command form and can be processed by an image producing program to produce graphs/images. Each record of the data should correspond to the correspondence code, and should have exactly the same segment structure as the correspondence code. Therefore, the data segment is also set as a structure of e characters. In this embodiment, c, d and e are natural numbers. By such indexing technique, since only a search for the same index code is required, the processing rate and efficiency can be increased regardless the chance of getting the same index code depends on the complexity of graph/image classification.

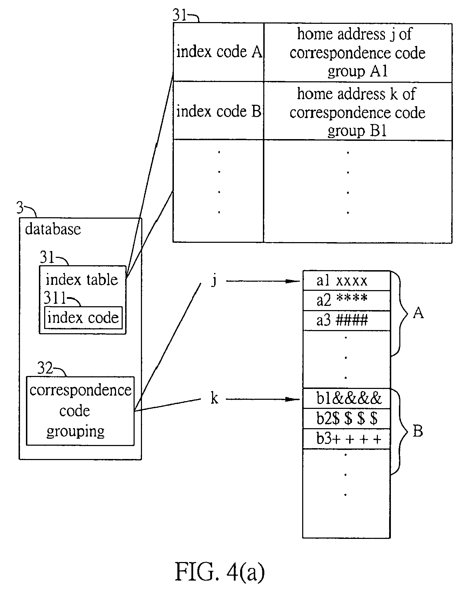

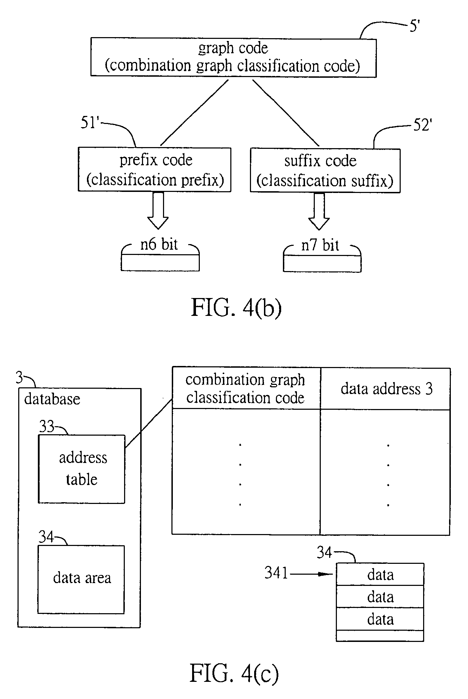

FIG. 4(a) is a schematic diagram showing configuration of the database in the graphics rendering system shown in FIG. 2 when utilizing the indexing technique. If using the indexing technique, as shown in FIG. 4(a), there would be an index table 31 and a correspondence code grouping 32 in the database 3, wherein the index table 31 is composed of index codes 311 and home addresses j, k... of correspondence code groups A1, B1... corresponding to the same index codes. In this embodiment, index codes 311 include index codes A, B...; and the correspondence code grouping 32 includes the correspondence code groups A1, B1... corresponding to the same index codes, and data following correspondence codes. For example, the correspondence code grouping 32 comprises the correspondence code group A1 corresponding to the index code A, wherein the correspondence code group A1 comprises correspondence codes a1, a2, a3 together with data xxxx, ****, #### respectively corresponding to the same index code A; and the correspondence code grouping 32 further comprises the correspondence code group B1 corresponding to the index code B, wherein the correspondence code group B1 comprises correspondence codes b1, b2, b3 together with data &&&&, $$$$, ++++ respectively corresponding to the same index code B. As shown in FIG. 4(a), the index table 31 comprises the index codes A, B..., the home address j of the correspondence code group A1, and the home address k of the correspondence code group B1. The correspondence code grouping 32 includes the correspondence code group A1 and the correspondence code group B1, wherein the correspondence code group A1 comprises the correspondence codes a1, a2, a3... corresponding to the same index code A, and the correspondence code group B1 comprises the correspondence codes b1, b2, b3... corresponding to the same index code B. The home address j in the index table 31 is a home address of the correspondence codes a1, a2, a3... in the correspondence code group A1 corresponding to the same index code A; and the home address k in the index table 31 is a home address of the correspondence codes b1, b2, b3... in the correspondence code group B 1 corresponding to the same index code B.

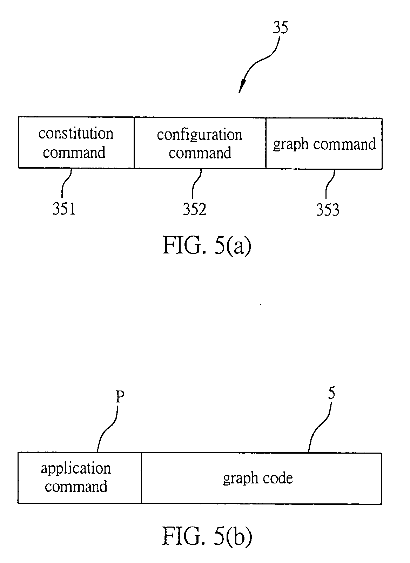

A graph code comprises a prefix code and a suffix code, wherein the prefix code is an index code and the suffix code is a correspondence code in this embodiment. By utilizing the aforementioned indexing technique, a file for correspondence codes of two characters is simply formed and then an index table is established by home addresses of correspondence code groups corresponding to the same index codes. The index table includes the index codes and the home addresses of the correspondence code groups corresponding to the same index codes, wherein the correspondence code groups corresponding to the same index codes and data following correspondence codes constitute a correspondence code grouping. Whenever a graph code is entered, the graph code comprising an index code (prefix code) and a correspondence code (suffix code), a search is conducted in the index table to find a home address of a correspondence code group corresponding to the index code (prefix code). Then, a search is conducted for one or more correspondence codes in the correspondence code grouping (having one or more correspondence code groups corresponding to the same home address) according to the home address in the index table so as to obtain the required correspondence code and thereby obtain the data following the correspondence code. Further, after obtaining the data, no matter what graph code is in correspondence with the data, the obtained data comprise one or more records of data and are all commands, and the image producing program 41 would interpret and execute those commands since the image producing program 41 is used to interpret and execute commands. A program is for processing data. To achieve most efficient data processing, data (i.e. the data obtained corresponding to the graph code) are designed to comprise commands that can be executed by the image producing program 41. FIG. 5(a) is a schematic diagram showing a command structure of data. As shown in FIG. 5(a), the data are designed to be in the command form. After appropriately analyzing the data obtained corresponding to the graph code, the data 35 are designed to comprise a constitution command 351, a configuration command 352, and a graph command 353. The constitution command 351 describes the relationship of proportional distribution between graphs constituting a picture, for instance, the proportional distribution of a graph head and graph body of a graph/image in the picture. The configuration command 352 describes the data configuration, and in order to save space, makes every kind of possible situation become a bit structure to be processed by the image producing program before obtaining the final graph/image data. The graph command 353 is used to fabricate graphs for constituting the picture so as to produce graphs/images.

When a graph code is entered into the graphics rendering system 1, it is analyzed to obtain a prefix code and a suffix code thereof, and correct configuration graphs can be obtained via the image producing module 4. The size and profile of the configuration graphs constituting a picture can be altered and set by a user in a manner of artificial intelligence. A program for producing the graphs constituting the picture is referred to as the image producing program, wherein the size of the graphs can be modified freely.

For the convenience of classification of the graph constitution when not using the indexing technique, the graph code 5 may also be set to comprise n5 segments, wherein n5 is a natural number. In this embodiment, for example, n5 = 2, that is, the graph code 5 comprises two segments. FIG. 4(b) is a schematic diagram showing a graph code being divided to obtain a classification prefix and a classification suffix. As shown in FIG. 4(b), the two segments of the graph code 5' are separated to have one segment as a prefix code 51' and the other segment as a suffix code 52'. In this embodiment, the prefix code 51' is the classification prefix, and the suffix code 52' is the classification suffix. The graph code 5' comprises the prefix code 51' and the suffix code 52', that is, the graph code 5' is composed of the classification prefix 51' and the classification suffix 52'. By a combination of the classification prefix 51' (prefix code 51') and the classification suffix 52' (suffix code 52'), a combination graph classification code 5' (comprising the classification prefix and the classification suffix) is obtained for the graph code 5'. The selection principle for graph codes depends on visual positions of graphs in accordance with the order of from exterior to interior, from up to down and from left to right. In this embodiment, according to the requirement of classification and resolution of graph/image, the classification prefix 51' (prefix code 51') can be set as n6 bits, for instance, n6 = 10, 15 or 20, that is, the classification prefix 51' can be 10 bits, 15 bits or 20 bits; the classification suffix 52' (suffix code 52') can be set as n7 bits, for instance, n7 = 15, 20 or 25, that is, the classification suffix 52' can be 15 bits, 20 bits or 25 bits. The prefix code 51' serves as the classification prefix 51', and the suffix code 52' serves as the classification suffix 52'. Each combination graph classification code 5' would correspond to an address where data corresponding to the combination graph classification code 5' are stored.

FIG. 4(c) is a schematic diagram showing configuration of the database in the graphics rendering system shown in FIG. 2 when not utilizing the indexing technique. As shown in FIG. 4(c), if not using the indexing technique, there would be an address table 33, which comprises combination graph classification codes and data addresses 341 of a data area 34, and the data area 34, which comprises data, in the database 3. There are f records of data in the data area 34, wherein the address of each record of data corresponds to a certain combination graph classification code 5' If each record of data is set as g characters, the f records of data would have f*g characters in total, and each of the data corresponds to a particular combination graph classification code.

If the indexing technique is not used, whenever a graph code 5', i.e. a combination graph classification code 5', is entered, a search can be conducted in the address table 33 to obtain the data address 341 of the data area 34 according to the combination graph classification code 5'. Then, a search is conducted in the data area 34 to obtain data according to the data address 341 from the address table 33, thereby obtaining the data corresponding to the combination graph classification code. No matter what combination graph classification code is in correspondence with the data, finally one or more records of data would be obtained and are all commands. The image producing program 41 would interpret and execute the commands since the image producing program 41 is used for interpretation and execution of commands. A program is for processing data. To achieve most efficient data processing, data (i.e. the data obtained corresponding to the combination graph classification code) are designed to comprise commands that can be executed by the image producing program 41.

FIG. 5(a) is a schematic diagram showing a command structure of data. As shown in FIG. 5(a), the data are designed to be in the command form. After appropriately analyzing the data obtained corresponding to the graph code, the data 35 are designed to comprise the foregoing constitution command 351, configuration command 352, and graph command 353.

Therefore, no matter whether the indexing technique is used or not, the command structure of data is the same. In other words, the command structure of data shown in FIG. 5(a) applies to both situations with/without employing the indexing technique.

When a graph code is entered into the graphics rendering system 1, it is analyzed to obtain a prefix code and a suffix code thereof, and correct configuration graphs can be obtained via the image producing module 4. The size and profile of the configuration graphs constituting a picture can be altered and set by a user in a manner of artificial intelligence. A program for producing the graphs constituting the picture is referred to as the image producing program 41, wherein the size of the graphs can be modified freely.

The image producing program 41 acts as a graph/image producing factory to satisfy every special requirement of graphs/images. As long as the constitution command, configuration command and graph command are defined in the data, graphs/images can be produced to obtain and output a picture by executing the commands no matter what ratio of graph constitution and size of graphs/images of the picture are required. For a graph/image superimposing combination or other types of combination of two pictures and for serial pictures, the user needs to use parameters to inform the image producing program 41 in order to produce the required picture.

FIG. 5(b) is a schematic diagram showing a combination condition of an application command and a graph code for a graph/image superimposing combination or other types of combination of one or more pictures. As shown in FIG. 5(b), an application command P of n8 characters (n8 is a natural number) can be added to the front of the graph code 5 to inform the image producing program 41 to produce correct graphs/images required by the user. Since graphs/images are produced by the image producing program 41, the user can simply select and set parameters in the application command P in advance so as to control a condition of the graph/image superimposing combination or other types of combination of the pictures and control the serial pictures.

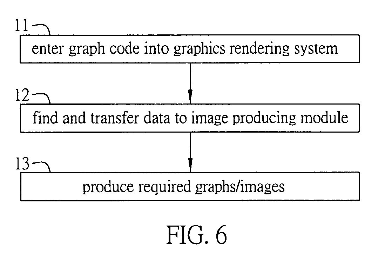

FIG. 6 is a flowchart showing procedural steps of a graphics rendering method in the use of the graphics rendering system 1 shown in FIG. 2. As shown in FIG. 6, first in Step 11, a graph code is entered into the graphics rendering system 1. Then, it proceeds to Step 12.

In Step 12, the graph code is analyzed by the graph code processing module 2 in the graphics rendering system 1 to find one or more records of data corresponding to the graph code according to information in the database 3, and transfer the one or more records of data to the image producing module 4. Then, it proceeds to Step 13.

In Step 13, when the image producing module 4 obtains the data, all the data are in the command form and required for outputting complete graphs/images. The image producing program 41 in the image producing module 4 is used to interpret and execute those commands. The image producing program 41 utilizes graph/image producing parameters obtained according to information provided by the data corresponding to the graph code so as to decode the composition, structure and ratio of graphs/images from the graph code, such that the required graphs/images can be produced and obtained by the image producing program 41 according to the graph/image producing parameters.

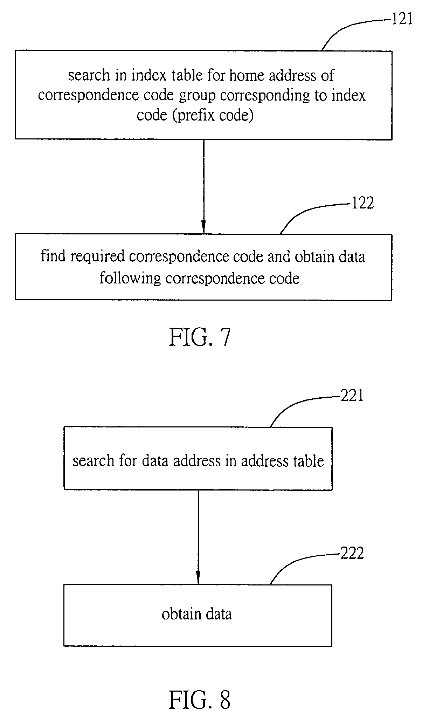

FIG. 7 is a flowchart showing a set of detailed procedures of a step for searching data in the graphics rendering method shown in FIG. 6. When an indexing technique is utilized, the graph code comprises a prefix code and a suffix code, wherein the prefix code serves as an index code and the suffix code serves as a correspondence code. By utilizing the aforementioned indexing technique, a file for correspondence codes of two characters is simply formed and then an index table is established by home addresses of correspondence code groups corresponding to the same index codes. The index table comprises the index codes and the home addresses of the correspondence code groups corresponding to the same index codes, wherein the correspondence code groups corresponding to the same index codes and data following correspondence codes constitute a correspondence code grouping.

As shown in FIG. 7, after the graph code is entered into the graphics rendering system 1, in Step 121, as the graph code comprises the index code (prefix code) and the correspondence code (suffix code), a search is conducted in the index table 31 for finding the home address of the correspondence code grouping 32 according to the index code (the prefix code). Then, it proceeds to Step 122.

In Step 122, a search is conducted for one or more correspondence codes of the correspondence code grouping 32 (having correspondence code groups comprising one or more correspondence codes corresponding to the same home address) according to the home address in the index table so as to obtain the required correspondence code and thereby obtain the data following the correspondence code. Further, after obtaining the data, no matter what graph code is in correspondence with the data, the obtained data comprise one or more records of data and are all commands, and the image producing program 41 would interpret and execute those commands.

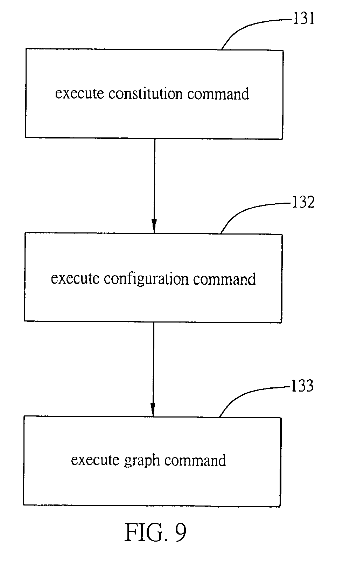

FIG. 8 is a flowchart showing another set of detailed procedures of the step for searching data in the graphics rendering method shown in FIG. 6. When the indexing technique is not utilized, the graph code comprises a prefix code and a suffix code, that is, the graph code is composed of a classification prefix and a classification suffix. By a combination of the classification prefix (prefix code) and the classification suffix (suffix code), a combination graph classification code (comprising the classification prefix and the classification suffix) is obtained for the graph code. Each combination graph classification code would correspond to an address where data corresponding to the combination graph classification code are stored. If the indexing technique is not utilized, there would be an address table 33, which comprises combination graph classification codes and data addresses 341 of a data area 34, and the data area 34, which comprises data, in the database 3.

As shown in FIG. 8, in Step 221, after the graph code, i.e. the combination graph classification code, is entered into the graphics rendering system 1, a search is conducted in the address table 33 to obtain a data address 341 in the data area 34 according to the combination graph classification code. Then, it proceeds to Step 222.

In Step 222, a search is conducted in the data area 34 to obtain data according to the data address 341, thereby obtaining the data corresponding to the combination graph classification code. After obtaining the data, no matter what combination graph classification code is in correspondence with the data, finally one or more records of data would be obtained and are all commands, and the image producing program 41 would interpret and execute the commands.

FIG. 9 is a flowchart showing detailed procedures of a step for executing a command by the image producing program to produce graphs/images in the graphics rendering method shown in FIG. 6. The data obtained corresponding to the graph code are appropriately analyzed, and the data are designed to comprise a constitution command 351, a configuration command 352, and a graph command 353. The constitution command 351 describes the relationship of proportional distribution between graphs constituting a picture, for instance, the proportional distribution of a graph head and graph body of a graph/image in the picture. The configuration command 352 describes the data configuration, and in order to save space, makes every kind of possible situation become a bit structure to be processed by the image producing program 41 before obtaining the final graph/image data. The graph command 353 is used to fabricate graphs for constituting the picture so as to produce graphs/images.

As shown in FIG. 9, after the image producing module 4 obtains the data, and since the data comprise the constitution command 351, configuration command 352 and graph command 353, first in Step 131, the image producing program 41 in the image producing module 4 executes the constitution command 351 to obtain the relationship of proportional distribution between graphs constituting the picture, for instance, a ratio between the graphs. Then, it proceeds to Step 132.

In Step 132, the image producing program 41 executes the configuration command 352 to realize the data configuration. Then, it proceeds to Step 133.

In Step 133, the image producing program 41 executes the graph command 353 to fabricate graphs for constituting the picture so as to produce graphs/images.

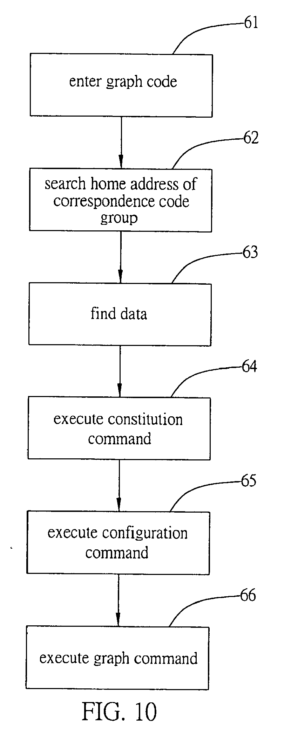

FIG. 10 is a flowchart showing procedures for producing graphs in a picture by the graphics rendering system and method according to a preferred embodiment of the present invention. As shown in FIG. 10, first in Step 61, a graph code is entered into the graphics rendering system 1. Then, it proceeds to Step 62.

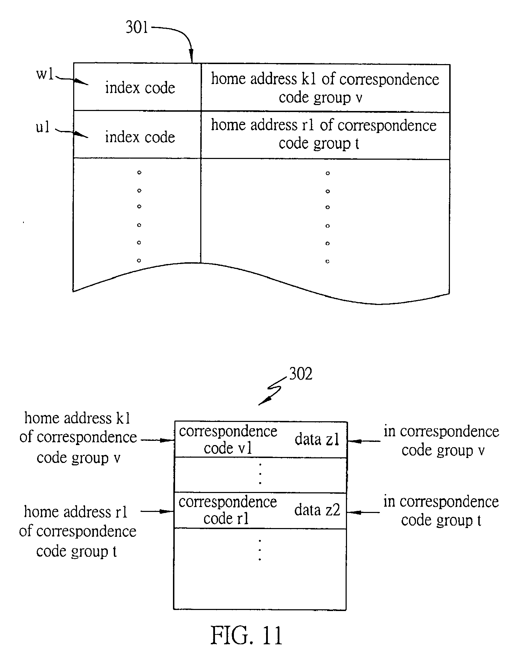

In Step 62, as the graph code w comprises an index code w1 (prefix code) and a correspondence code v1 (suffix code), a search is conducted in the index table 301 to find a home address k1 of a correspondence code group v corresponding to the index code w1 (prefix code) as shown in FIG. 11, wherein the index table 301 is shown in FIG. 11, and the correspondence code v1 is located in the correspondence code group v. Then, it proceeds to Step 63.

In Step 63, a search is conducted for correspondence codes of the correspondence code group v in the correspondence code grouping 302 (having correspondence code groups comprising one or more correspondence codes corresponding to the same home address) according to the home address k1 in the index table 301 so as to find the required correspondence code v1 and thereby obtain data z1 following the correspondence code v1. In this embodiment, the data z1 comprise 16 bits and are all commands, such that the image producing program 41 would interpret and execute the commands. Then, it proceeds to Step 64.

In Step 64, the image producing program 41 in the image producing module 4 executes the constitution command 351 of the data z1 so as to obtain the relationship of proportional distribution between graphs constituting a picture. In this embodiment, there is obtained a picture in a left-right pattern, that is, the picture comprises a left half and a right half that are equal in size. Then, it proceeds to Step 65.

In Step 65, the image producing program 41 executes the configuration command 352 to realize the data configuration. In this embodiment, there are obtained a graph in the left half of the picture and another graph in the right half of the picture. The location and size of both the graphs are also obtained. Then, it proceeds to Step 66.

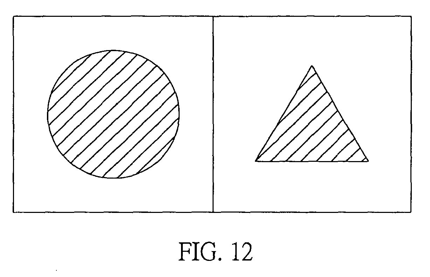

In Step 66, the image producing program 41 executes the graph command 353 to fabricate graphs for constituting the picture so as to produce graphs/images. In this embodiment, as shown in FIG. 12, there would be produced a solid circle in the left half of the picture and a solid triangle in the right half of the picture.

This embodiment utilizing the indexing technique can be similarly implemented without the indexing technique, and thus the latter case is not further to be described herein.

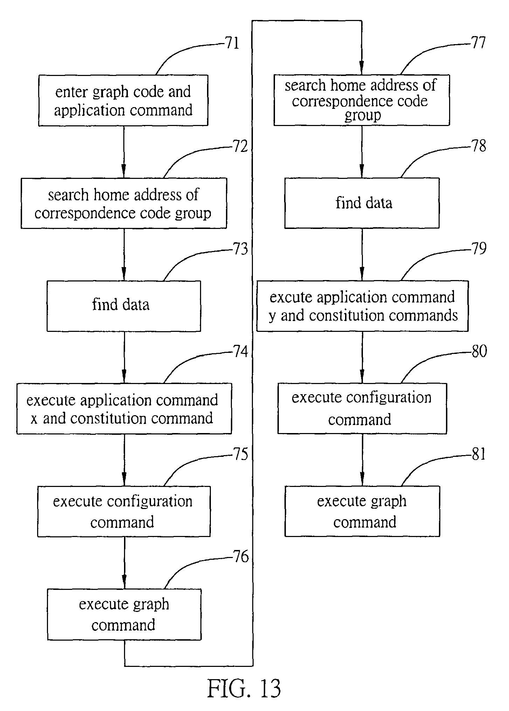

FIG. 13 is a flowchart showing procedures for producing graphs in a picture by the graphics rendering system and method according to another preferred embodiment of the present invention. In this embodiment, there would be entered two graph codes, that is, a first picture would be produced, and then a second picture would be produced and superimposed onto the first picture. In such case of a superimposing combination of two pictures, an application command P should be added to the front of each of the two graph codes to clarify the condition of superimposition. In this embodiment, graphs in the second picture would overlap and cover graphs in the first picture, and therefore after such superimposed picture is complete, the graphs in the first picture are only shown by the uncovered part thereof.

As shown in FIG. 13, first in Step 71, a combination (graph code w + application command x) and a combination (graph code u + application command y) are entered into the graphics rendering system 1. Then, it proceeds to Step 72.

In Step 72, the combination of graph code w + application command x is firstly processed. As the application command x is not a graph code, only the graph code w is subjected to processing. The graph code w comprises the index code w1 (prefix code) and the correspondence code v1 (suffix code), such that a search is firstly conducted in the index table 301 to find the home address k1 of the correspondence code group v corresponding to the index code w1 (prefix code), wherein the index table 301 is shown in FIG. 11, and the correspondence code v1 is located in the correspondence code group v. Then, it proceeds to Step 73.

In Step 73, a search is conducted for correspondence codes of the correspondence code group v in the correspondence code grouping 302 (having correspondence code groups comprising one or more correspondence codes corresponding to the same home address) according to the home address k1 in the index table 301 so as to find the required correspondence code v1 and thereby obtain the data z1 following the correspondence code v1. In this embodiment, the data z1 comprise 16 bits and are all commands, such that the image producing program 41 would interpret and execute the commands. Then, it proceeds to Step 74.

In Step 74, the image producing program 41 in the image producing module 4 executes the application command x and the constitution command 351 of the data z1. In this embodiment, from the application command x, it is realized that when a produced picture is superimposed onto another picture, the covered part of graphs of the latter picture would not be shown, while only the uncovered part of the latter picture would be shown. By executing the constitution command 351 of the data z1, the relationship of proportional distribution between graphs constituting a picture is obtained. In this embodiment, from the constitution command 351 of the data z1, it is realized that the picture is in a left-right pattern, that is, the picture comprises a left half and a right half that are equal in size. Then, it proceeds to Step 75.

In Step 75, the image producing program 41 executes the configuration command 352 to realize the data configuration. In this embodiment, there are obtained a graph in the left half of the picture and another graph in the right half of the picture. The location and size of both the graphs are also obtained. Then, it proceeds to Step 76.

In Step 76, the image producing program 41 executes the graph command 353 to fabricate graphs for constituting the picture so as to produce graphs/images. In this embodiment, as shown in FIG. 12, there would be produced a solid circle in the left half of the picture and a solid triangle in the right half of the picture. Then, it proceeds to Step 77.

In Step 77, the combination of graph code u and application command y is processed. As the application command y is not a graph code, only the graph code u is subjected to processing. The graph code u comprises an index code u1 (prefix code) and a correspondence code t1 (suffix code), such that a search is conducted in the index table 301 to find a home address r1 of a correspondence code group t corresponding to the index code u1 (prefix code) as shown in FIG. 11, wherein the index table 301 is shown in FIG. 11, and the correspondence code t1 is located in the correspondence code group t. Then, it proceeds to Step 78.

In Step 78, a search is conducted for correspondence codes of the correspondence code group t in the correspondence code grouping 302 (having correspondence code groups comprising one or more correspondence codes corresponding to the same home address) according to the home address r1 in the index table 301 so as to find the required correspondence code t1 and thereby obtain data z2 following the correspondence code t1. In this embodiment, the data z2 comprise 16 bits and are all commands, such that the image producing program 41 would interpret and execute the commands. Then, it proceeds to Step 79.

In Step 79, the image producing program 41 in the image producing module 4 executes the application command y and the constitution command 351 of the data z2. In this embodiment, from the application command y, it is realized that a second picture produced would be superimposed onto a first picture, and the superimposed part of graphs of the first and second pictures would only be shown by the graphs of the second picture. By executing the constitution command 351 of the data z2, the relationship of proportional distribution between graphs constituting a picture is obtained. In this embodiment, it is realized that the picture is in a left-right pattern, that is, the picture comprises a left half and a right half that are equal in size. Then, it proceeds to Step 80.

In Step 80, the image producing program 41 executes the configuration command 352 to realize the data configuration. In this embodiment, there are obtained a graph in the left half of the picture and another graph in the right half of the picture. The location and size of both the graphs are also obtained. Then, it proceeds to Step 81.

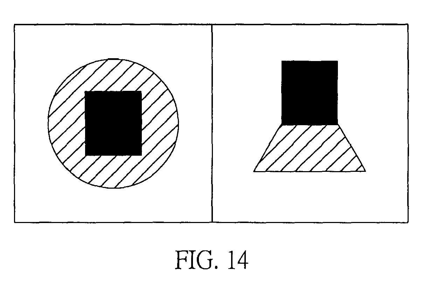

In Step 81, the image producing program 41 executes the graph command 353 to fabricate graphs for constituting the picture so as to produce graphs/images. In this embodiment, there would be produced a solid quadrangle in the left half of the picture and another solid quadrangle in the right half of the picture. Since this embodiment involves superimposition of two pictures, the application commands x and y should be executed, such that the obtained superimposed picture is shown in FIG. 14.

This embodiment utilizing the indexing technique can be similarly implemented without the indexing technique, and thus the latter case is not further to be described herein.

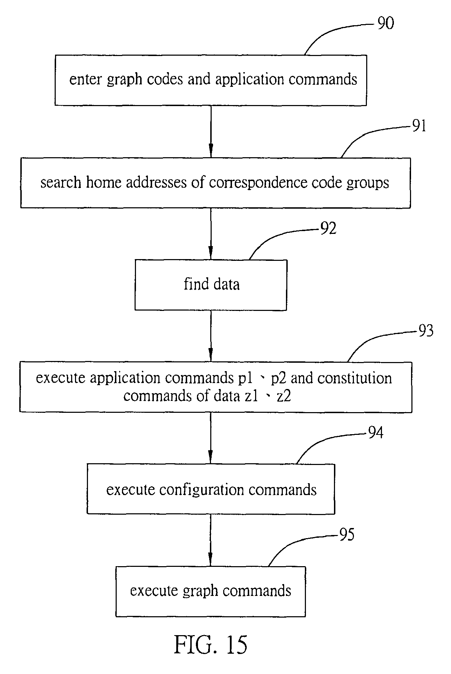

FIG. 15 is a flowchart showing procedures for producing graphs in a picture by the graphics rendering system and method according to a further preferred embodiment of the present invention. In this embodiment, two graph codes would be entered, such that there would be produced two pictures at the same time and a condition of picture superimposition is considered. In the case of a condition of superimposing graphs in the two pictures, an application command should be added to the front of each of the two graph codes to clarify the condition of superimposition. In this embodiment, the graphs in the second picture would be superimposed onto the graphs in the first picture, and the superimposed part of the graphs of the first and second pictures would be shown by the graphs in the first picture, that is, the graphs in the second picture are relatively transparent to the graphs in the first picture within the superimposed part of the graphs of the first and second pictures.

As shown in FIG. 15, first in Step 90, a combination (graph code w + application command p1) and a combination (graph code u + application command p2) are entered into the graphics rendering system 1. Then, it proceeds to Step 91.

In Step 91, the combination of graph code w + application command p1 and the combination of graph code u + application command p2 are processed at the same time. As the application commands p and p2 are not graph codes, only the graph codes w and u are subjected to processing. The graph code w comprises the index code w1 (prefix code) and the correspondence code v1 (suffix code), and the graph code u comprises the index code u1 (prefix code) and the correspondence code t1 (suffix code), such that a search is conducted in the index table 301 to find the home address k1 of the correspondence code group v corresponding to the index code w1 (prefix code) and find the home address r1 of the correspondence code group t corresponding to the index code u1 (prefix code), wherein the index table 301 is shown in FIG. 11, and the correspondence code v1 is located in the correspondence code group v and the correspondence code t1 is located in the correspondence code group t. Then, it proceeds to Step 92.

In Step 92, a search is conducted for correspondence codes of the correspondence code groups v and t in the correspondence code grouping 302 (having correspondence code groups comprising one or more correspondence codes corresponding to the same home address) according to the home address k1 and r1 in the index table 301 so as to find the required correspondence codes v1, t1 and thereby obtain the data z1, z2 respectively following the correspondence codes v1, t1. In this embodiment, the data z1, z2 respectively comprise 16 bits and are all commands, such that the image producing program 41 would interpret and execute the commands. Then, it proceeds to Step 93.

In Step 93, the image producing program 41 in the image producing module 4 executes the application commands p1, p2 and the constitution commands of the data z1, z2. In this embodiment, from the application commands, it is realized that when the graphs in the second picture are superimposed onto the graphs in the first picture, the superimposed part of the graphs in the first and second pictures would be shown by the graphs in the first picture, that is, the graphs in the second picture are relatively transparent to the graphs in the first picture within the superimposed part of the graphs in the first and second pictures. By respectively executing the constitution commands of the data z1, z2, the relationship of proportional distribution between graphs constituting the pictures respectively is obtained. In this embodiment, from the constitution commands of the data z1, z2, it is realized that the two pictures are both in a left-right pattern, that is, each of the two pictures comprises a left half and a right half that are equal in size. Then, it proceeds to Step 94.

In Step 94, the image producing program 41 executes the configuration commands respectively to realize the data configuration. In this embodiment, there are obtained a graph in the left half of each of the two pictures and another graph in the right half of each of the two pictures. The location and size of the both graphs are also obtained. Then, it proceeds to Step 95.

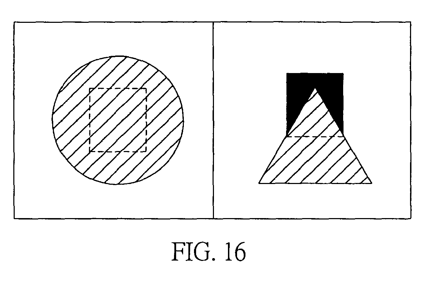

In Step 95, the image producing program 41 executes the graph commands to fabricate graphs for constituting each of the two pictures so as to produce graphs/images. In this embodiment, as shown in FIG. 12, there would be produced a solid circle in the left half of the first picture and a solid triangle in the right half of the first picture; as shown in FIG. 14, there would be produced a solid quadrangle respectively in the left and right halves of the second picture. In this embodiment, the two pictures are superimposed, and the graphs in the second picture are relatively transparent to the graphs in the first picture within the superimposed part of the graphs of the first and second pictures, such that the application commands p1, p2 should be executed, and the obtained superimposed picture would be shown in FIG. 16.

Although this embodiment involves simultaneous input of two graph codes and two application commands, the same principle is also applied to the case with more than two graph codes and application commands being entered at the same time, which is thus not to be further described herein.

In addition, this embodiment utilizing the indexing technique can be similarly implemented without the indexing technique to obtain a desired picture, and thus the latter case is not to be further described herein.

In conclusion from the foregoing embodiments, the graphics rendering system and method according to the present invention are applied in an environment for graph production and image processing. When a graph code is entered into in the graphics rendering system, it is analyzed by the graphics rendering system to find one or more records of data corresponding to the graph code, and decode the composition, structure and ration of graphs/images from the graph code according to graph/image producing parameters corresponding to information provided by the data corresponding to the graph code. As a result, the graphics rendering system produces and obtains the required graphs/images according to the graph/image producing parameters without having to use lookup table mapping to obtain graphs/images from an image database or without having to constitute the graphs/images from the image database in an automated or manual manner. Therefore, by the graphics rendering system and method in the present invention, a graph code is entered into the graphics rendering system where the composition, structure and ration of graphs/images are decoded from the graph code according to information provided by data corresponding to the graph code, so as to produce and obtained the required graphs/images. Thus, there is no need to use lookup table mapping to obtain graphs/images from the image database, and there is no need to constitute the graphs/images from the image database in an automated or manual manner. Moreover, the graph code processing module in the graphics rendering system analyzes the graph code to find one or more records of data corresponding to the graph code, and transfers the one or more records of data to the image producing module. When the image producing module obtains the data, the obtained data are all in the command form and required for outputting complete graphs/images. Furthermore, as long as there is a graph code, without requiring any lookup table and without having each graph code necessarily corresponding to a certain graph/image in the image database, the composition, structure and ration of graphs/images can be decoded from the graph code, and the required graphs/images can be produced and obtained according to the graph/image producing parameters.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A graphics rendering method, applied to a graphics rendering system for graph production and image processing, comprising the steps of:
(1) entering at least one graph code into the graphics rendering system where the graph code is analyzed so as to find at least one record of data corresponding to the graph code, then proceeding to step (2); and
(2) after the graphics rendering system obtains the data that are required for outputting complete graphs/images and comprise commands, wherein information provided by the data includes graph/image producing parameters, interpreting and executing the commands via the graphics rendering system to produce and obtain the required graphs/images according to the graph/image producing parameters.

2. The graphics rendering method of claim 1, wherein the graph code comprises an index code and a correspondence code.

3. The graphics rendering method of claim 1, wherein the graph code comprises an index code and a correspondence code, and the graph code has a multi-layer structure of at least two layers.

4. The graphics rendering method of claim 1, wherein the graph code comprises a classification prefix and a classification suffix.

5. The graphics rendering method of claim 1, wherein the graph code comprises a classification prefix and a classification suffix, and the graph code has a multi-layer structure of at least two layers.

6. The graphics rendering method of claim 1, wherein the step (2) of obtaining the data and executing the commands further comprises:
(2-1) with the graph code comprising an index code and a correspondence code, conducting a search in an index table to find a home address of a correspondence code group according to the index code, then proceeding to step (2-2); and
(2-2) with the index table comprising index codes and home addresses of correspondence code groups corresponding to the same index codes, and a correspondence code grouping comprising the correspondence code groups corresponding to the same index codes and data following correspondence codes in the correspondence code groups, conducting a search according to the home address in the index table for at least one of the correspondence codes in the correspondence code grouping that has correspondence code groups comprising one or more correspondence codes corresponding to the same home address, so as to find the required correspondence code and thereby obtain the data following the correspondence code, wherein the obtained data comprise commands, and the commands are interpreted and executed by an image producing program.

7. The graphics rendering method of claim 1, wherein the step (2) of obtaining the data and executing the commands further comprises:
(2-1) with the graph code serving as a combination graph classification code and comprising a classification prefix and a classification suffix, wherein each combination graph classification code corresponds to an address where data corresponding to the combination graph classification code are stored, after the combination graph classification code is entered, conducting a search in an address table to find a data address of a data area according to the combination graph classification code, wherein the address table comprises combination graph classification codes and data addresses of the data area, and the data area comprises data, then proceeding to step (2-2); and
(2-2) conducting a search for data in the data area according to the data address, so as to obtain at least one record of data corresponding to the combination graph classification code, wherein the obtained data comprise commands, and the commands are interpreted and executed by an image producing program.

8. The graphics rendering method of claim 1, wherein the step (2) of obtaining the data and executing the commands further comprises:
(2-1) having an image producing program in an image producing module of the graphics rendering system execute a constitution command to obtain relationship of proportional distribution between graphs constituting a picture, then proceeding to step (2-2);
(2-2) executing a configuration command via the image producing program to realize data configuration, wherein the configuration command makes graph data become a bit structure respectively to be processed by the image producing program prior to obtaining all the graph data, then proceeding to step (2-3); and
(2-3) executing a graph command via the image producing program to fabricate graphs for constituting the picture so as to produce graphs/images.

9. The graphics rendering method of claim 8, wherein the step (2-1) of executing the constitution command via the image producing program further comprises:
executing an application command via the image producing program in the image producing module, wherein the application command provides image parameters, such that the image producing program determines a displaying state of at least one image on a display picture according to the image parameters.

10. The graphics rendering method of claim 9, wherein the displaying state of the display picture includes one of a combination of superimposing images, separate display of images, and successive display of images.

11. A graphics rendering method, applied to a graphics rendering system for graph production and image processing, comprising the steps of:
(1) entering at least one graph code into the graphics rendering system, and analyzing the graph code via a graph code processing module in the graphics rendering system according to information in a database so as to find at least one record of data corresponding to the graph code and transfer the at least one record of data to an image producing module, then proceeding to step (2); and
(2) after the image producing module obtains the data that are required for outputting complete graphs/images and comprise commands, interpreting and executing the commands via an image producing program in the image producing module, wherein information provided by the data includes graph/image producing parameters, and composition, structure and ratio of graphs/images are obtained from the data, such that the image producing program produces the required graphs/images according to the graph/image producing parameters.

12. The graphics rendering method of claim 11, wherein the graph code comprises an index code and a correspondence code.

13. The graphics rendering method of claim 11, wherein the graph code comprises an index code and a correspondence code, and the graph code has a multi-layer structure of at least two layers.

14. The graphics rendering method of claim 11, wherein the graph code comprises a classification prefix and a classification suffix.

15. The graphics rendering method of claim 11, wherein the graph code comprises a classification prefix and a classification suffix, and the graph code has a multi-layer structure of at least two layers.

16. The graphics rendering method of claim 11, wherein the step (2) of obtaining the data and executing the commands further comprises:
(2-1) with the graph code comprising an index code and a correspondence code, conducting a search in an index table to find a home address of a correspondence code group according to the index code, then proceeding to step (2-2); and
(2-2) with the index table comprising index codes and home addresses of correspondence code groups corresponding to the same index codes, and a correspondence code grouping comprising the correspondence code groups corresponding to the same index codes and data following correspondence codes in the correspondence code groups, conducting a search according to the home address in the index table for at least one of the correspondence codes in the correspondence code grouping that has correspondence code groups comprising one or more correspondence codes corresponding to the same home address, so as to find the required correspondence code and thereby obtain the data following the correspondence code, wherein the obtained data comprise commands, and the commands are interpreted and executed by the image producing program.

17. The graphics rendering method of claim 11, wherein the step (2) of obtaining the data and executing the commands further comprises:
(2-1) with the graph code serving as a combination graph classification code and comprising a classification prefix and a classification suffix, wherein each combination graph classification code corresponds to an address where data corresponding to the combination graph classification code are stored, after the combination graph classification code is entered, conducting a search in an address table to find a data address of a data area according to the combination graph classification code, wherein the address table comprises combination graph classification codes and data addresses of the data area, and the data area comprises data, then proceeding to step (2-2); and
(2-2) conducting a search for data in the data area according to the data address, so as to obtain at least one record of data corresponding to the combination graph classification code, wherein the obtained data comprise commands, and the commands are interpreted and executed by the image producing program.

18. The graphics rendering method of claim 11, wherein the step (2) of obtaining the data and executing the commands further comprises:
(2-1) having the image producing program in the image producing module of the graphics rendering system execute a constitution command to obtain relationship of proportional distribution between graphs constituting a picture, then proceeding to step (2-2);
(2-2) executing a configuration command via the image producing program to realize data configuration, wherein the configuration command makes graph data become a bit structure respectively to be processed by the image producing program prior to obtaining all the graph data, then proceeding to step (2-3); and
(2-3) executing a graph command via the image producing program to fabricate graphs for constituting the picture so as to produce graphs/images.

19. The graphics rendering method of claim 18, wherein the step (2-1) of executing the constitution command via the image producing program further comprises:
executing an application command via the image producing program in the image producing module, wherein the application command provides image parameters, such that the image producing program determines a displaying state of at least one image on a display picture according to the image parameters.

20. The graphics rendering method of claim 19, wherein the displaying state of the display picture includes one of a combination of superimposing images, separate display of images, and successive display of images.

21. A graphics rendering system for providing graph production and image processing, comprising:
a database for storing at least one graph code containing information;
a graph code processing module for receiving the graph code and analyzing the graph code according to the information corresponding to the graph code in the database so as to find at least one record of data corresponding to the graph code and transfer the at least one record of data to an image producing module; and
the image producing module for receiving the data from the graph code processing module, the data comprising commands, and for interpreting and executing the commands so as to obtain composition, structure and ratio of graphs/images from the graph code according to graph/image producing parameters provided by the data and produce the required graphs/images according to the graph/image producing parameters.

22. The graphics rendering system of claim 21, wherein the image producing module includes an image producing program for interpreting and executing the commands so as to obtain the composition, structure and ratio of graphs/images from the graph code according to the graph/image producing parameters provided by the data from the graph code processing module and produce the required graphs/images according to the graph/image producing parameters.

23. The graphics rendering system of claim 21, wherein the database comprises:
an index table comprising index codes and home addresses of correspondence code groups corresponding to the same index codes; and
a correspondence code grouping comprising the correspondence code groups corresponding to the same index codes and data following correspondence codes in the correspondence code groups.

24. The graphics rendering system of claim 21, wherein the database comprises:
an address table comprising combination graph classification codes and data addresses of a data area; and
the data area comprising data, wherein after a combination graph classification code is entered, a search is conducted in the address table to obtain a data address of the data area according to the combination graph classification code, and a search is conducted in the data area to obtain data according to the data address, such that the obtained data allow data corresponding to the combination graph classification code to be obtained.

25. The graphics rendering system of claim 23, wherein the database further comprises:
an address table comprising combination graph classification codes and data addresses of a data area; and
the data area comprising data, wherein after a combination graph classification code is entered, a search is conducted in the address table to obtain a data address of the data area according to the combination graph classification code, and a search is conducted in the data area to obtain data according to the data address, such that the obtained data allow data corresponding to the combination graph classification code to be obtained.

26. The graphics rendering system of claim 21, wherein the graphics rendering system is a hardware chip.

27. The graphics rendering system of claim 21, wherein the graphics rendering system is computer software stored in a memory device of a computer system.
